(19) Europäisches Patentamt / European Patent Office / Office européen des brevets

(11) **EP 2 214 818 B1**

(12) **FASCICULE DE BREVET EUROPEEN**

(45) Date de publication et mention
de la délivrance du brevet:
**08.05.2019 Bulletin 2019/19**

(21) Numéro de dépôt: **08871363.1**

(22) Date de dépôt: **24.10.2008**

(51) Int Cl.:
*B01J 23/58* *(2006.01)*    *B01J 37/02* *(2006.01)*
*B01J 37/06* *(2006.01)*    *B01J 37/16* *(2006.01)*
*B01J 35/10* *(2006.01)*

(86) Numéro de dépôt international:
**PCT/FR2008/001506**

(87) Numéro de publication internationale:
**WO 2009/092879 (30.07.2009 Gazette 2009/31)**

(54) **Procédé de préparation d'un catalyseur comprenant du palladium**

Verfahren zur Herstellung eines Katalysator enthaltend Palladium

process for preparing a palladium containing catalyst

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **29.10.2007 FR 0707699**

(43) Date de publication de la demande:
**11.08.2010 Bulletin 2010/32**

(73) Titulaire: **IFP Energies nouvelles
92500 Rueil-Malmaison (FR)**

(72) Inventeurs:
• **FISCHER, Lars
F-38200 Vienne (FR)**
• **PETIT-CLAIR, Carine
F-38200 Jardin (FR)**
• **THOMAZEAU, Cécile
F-69008 Lyon (FR)**

• **SORBIER, Loïc
F-38200 Seyssuel (FR)**
• **VERDON, Catherine
69120 VAULX EN VELIN (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A- 0 715 889    EP-A- 0 979 673**

Remarques:
Le dossier contient des informations techniques
présentées postérieurement au dépôt de la demande
et ne figurant pas dans le présent fascicule.

## Description

Les catalyseurs d'hydrogénation sélective des composés hydrocarbonés insaturés présent dans les coupes d'hydrocarbures, de préférence des coupes issues du vapocraquage ou du craquage catalytique, sont souvent à base de palladium, sous forme de petites particules métalliques déposées sur un support qui peut être un oxyde réfractaire sous forme de billes, d'extrudés, de trilobes ou sous des formes présentant d'autres géométries. La teneur en palladium et la taille des particules de palladium font partie des critères qui ont une importance sur l'activité et la sélectivité des catalyseurs.

La répartition macroscopique des particules métalliques dans le support constitue également un critère important, principalement dans le cadre de réactions rapides et consécutives telles que les hydrogénations sélectives. Il faut généralement que ces éléments se situent dans une croûte à la périphérie du support afin d'éviter les problèmes de transfert de matière intragranulaire pouvant conduire à des défauts d'activité et une perte de sélectivité.

La présente invention vise à obtenir des catalyseurs ayant une activité catalytique supérieure à celle des catalyseurs de l'art antérieur.

La densité de particules de palladium dans l'art antérieur est calculée pour des catalyseurs dans lesquels le palladium est réparti en croûte.

Le brevet US5929261 décrit des catalyseurs comprenant une croûte de 5 $\mu$m maximum de métaux. Ces catalyseurs sont obtenus par imprégnation ou pulvérisation (spraying selon la terminologie anglo-saxonne) de sols métalliques sur supports chauds. Le catalyseur de l'exemple 1 est un catalyseur palladium sur alumine comprenant 0,05% poids de palladium, la surface BET de l'alumine étant de 290 m$^2$/g. Compte tenu du mode de préparation employé, les tailles de particules de palladium sont comprises entre 2 et 4 nm et les sphères d'alumine ont un diamètre compris entre 1,5 et 4 mm. Il en découle une densité de particules de Palladium comprise entre 200 et 6600 particules de Pd /$\mu$m$^2$.

Le brevet US4484015 décrit entre autres des catalyseurs monométalliques au palladium comprenant une croûte de 300 $\mu$m de Palladium. L'exemple 1 correspond à un catalyseur comprenant 0,017% poids de palladium. Ce catalyseur est obtenu par imprégnation d'une solution acide de palladium sur des sphères d'alumine alpha de 6 m$^2$/g et de diamètre 4 mm. D'après le mode de préparation employé, les nanoparticules de Pd ont des tailles comprises entre 2,5 et 4 mm. Il en découle une densité de particules de Palladium comprises entre 170 et 750 particules de Pd /$\mu$m$^2$.

Le brevet EP0884102 décrit entre autres des catalyseurs comprenant du palladium, avec un dépôt à la périphérie des billes du support sur une profondeur inférieure ou égale à 80% du rayon, éventuellement en association avec un promoteur tel que le molybdène ou le tungstène. L'exemple 1 correspond à la préparation d'un catalyseur monométallique comprenant 0,35% poids de palladium. La préparation est réalisée par imprégnation d'une solution de nitrate de palladium sur des billes d'alumine de surface BET 35 m$^2$/g et de diamètre moyen 3 mm. D'après le mode de préparation employé, les nanoparticules de palladium ont des tailles comprises entre 4 et 4,5 mm. Il en découle une densité de particules de Palladium comprise entre 150 et 250 particules de Pd / $\mu$m$^2$.

## RESUME DE L'INVENTION

L'invention concerne la préparation d'un catalyseur comprenant du palladium.

## DESCRIPTION DÉTAILLÉE DE L'INVENTION

### Caractéristique du catalyseur

Elle concerne des catalyseurs comprenant:

- du palladium
- au moins un métal sélectionné dans le groupe constitué par les alcalins et les alcalino-terreux
- un support poreux comprenant au moins un oxyde réfractaire sélectionné dans le groupe constitué par la silice, l'alumine et la silice-alumine, de manière très préférée le support poreux est l'alumine,

dans lequel:

- la surface spécifique du support poreux est comprise entre 50 et 210 m$^2$/g, de manière préférée entre 100 et 160 m$^2$/g, de manière très préférée entre 120 et 150 m$^2$/g.
- la teneur en palladium dans le catalyseur est comprise entre 0,05 et 2 % poids, de façon préférée entre 0,1 et 0,8 % poids.
- au moins 80 % poids de Palladium est réparti dans une croûte à la périphérie du support, l'épaisseur de ladite croûte étant comprise entre 20 et 200 $\mu$m, de préférence entre 20 et 120 $\mu$m, de façon très préférée entre 20 et 110 $\mu$m

- la dispersion métallique D est comprise entre 25% et 70%, de préférence entre 35% et 60%
- la densité de particules de palladium dans la croûte notée De (défini dans la suite du - texte) est comprise entre 1500 et 4100 particules de palladium par $\mu m^2$, de préférence comprise entre 1550 et 4000 particules de palladium par $\mu m^2$, de préférence comprise entre 1600 et 3950 particules de palladium par $\mu m^2$
- la somme des teneurs en métaux alcalins et/ou alcalino-terreux dans le catalyseur est comprise entre 0,05 et 5 % poids, de manière plus préférée comprise entre 0,1 et 2 % poids.
- le métal alcalin et/ou alcalino-terreux est réparti de manière homogène à travers le support avec un coefficient R (défini dans la suite du texte) compris entre 0,8 et 1,2.

Selon l'invention, le support poreux se présente sous forme de billes.

Le volume poreux du support est généralement compris entre 0,1 et 1,5 $cm^3$/g, de préférence compris entre 0,5 et 1,3 $cm^3$/g.

Le métal alcalin est généralement sélectionné dans le groupe constitué par le lithium, le sodium, le potassium, le rubidium et le césium, de préférence par le lithium, le sodium et le potassium, de manière très préférée par le sodium et le potassium. De manière encore plus préférée, le métal alcalin est le sodium.

Le métal alcalino-terreux est généralement sélectionné dans le groupe constitué par le magnésium, le calcium, le strontium et le baryum, de préférence par le magnésium et le calcium, de manière très préférée par le magnésium.

Le métal alcalin, lorsqu'il est présent, est réparti de manière homogène à travers le support avec un coefficient R compris entre 0,8 et 1,2.

Le métal alcalino-terreux, lorsqu'il est présent, est réparti de manière homogène à travers le support avec un coefficient R compris entre 0,8 et 1,2.

Définition du coefficient R

Les profils de répartition des éléments au sein des grains de catalyseurs sont obtenus par microsonde de Castaing. Au moins 30 points d'analyses sont effectués le long du diamètre de la bille ou de l'extrudé à raison d'une dizaine de point sur la croûte de l'élément actif (ici le palladium) et d'une dizaine de point au centre du grain. Il est ainsi obtenu le profil de répartition $c(x)$ pour $x \in$ [-r;+r] avec c la concentration locale de l'élément, r le rayon de la bille ou de l'extrudé et x la position du point d'analyse le long du diamètre du grain par rapport au centre de ce grain.

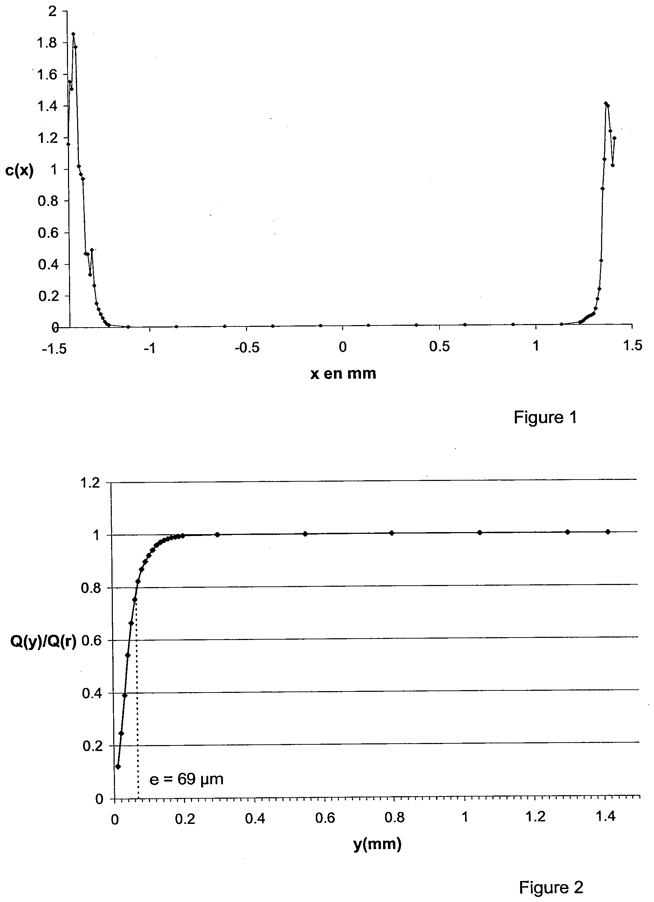

La figure 1 montre un exemple de profil obtenu.

La répartition des éléments est caractérisée par un coefficient R adimensionnel pondérant la concentration locale par un poids croissant en fonction de la position sur le diamètre. Par définition :

$$R = \int_{-r}^{r} c(x)x^2\,dx \Big/ \frac{r^2}{3}\int_{-r}^{r} c(x)\,dx$$

Ainsi un élément dont la concentration est uniforme présente un coefficient R égal à 1, un élément déposé en dôme (concentration au coeur plus importante que la concentration aux bords du support) présente un coefficient supérieur à 1 et un élément réparti en croûte (concentration aux bords plus importante que la concentration au coeur du support) présente un coefficient inférieur à 1. L'analyse par microsonde de Castaing donne les valeurs des concentrations en un nombre fini de valeurs de x, R est ainsi évalué numériquement par des méthodes d'intégration bien connues de l'homme du métier. De préférence, R est déterminé par la méthode des trapèzes.

La répartition de l'élément alcalin est définie comme homogène lorsque le coefficient de répartition R défini ci-dessus est compris entre 0,8 et 1,2.

La répartition de l'élément alcalino-terreux est définie comme homogène lorsque le coefficient de répartition R défini ci-dessus est compris entre 0,8 et 1,2.

Définition de l'épaisseur de croûte

Lorsque le palladium est reparti en croûte, sa concentration locale diminue généralement progressivement lorsqu'elle est mesurée en partant du bord du grain catalytique vers l'intérieur. Une distance du bord du grain, à laquelle la teneur locale en palladium devient nulle, ne peut souvent pas être déterminée avec précision et reproductibilité. Afin de mesurer une épaisseur de croûte qui est significative pour la majorité des particules de palladium, l'épaisseur de croûte est définie comme la distance au bord du grain contenant 80 % de l'élément.

A partir du profil de répartition obtenu par microsonde de Castaing, on calcule la quantité cumulée $Q(y)$ de l'élément dans le grain en fonction de la distance y au bord du grain.

Pour une bille :

$$Q(y) = \int_{-r}^{-y} c(x) 4\pi.x^2 dx + \int_{y}^{r} c(x) 4\pi.x^2 dx$$

Pour un extrudé :

$$Q(y) = \int_{-r}^{-y} c(x) 2\pi.x dx + \int_{y}^{r} c(x) 2\pi.x dx$$

Q(r) correspond ainsi à la quantité totale de l'élément dans le grain. On résout ensuite numériquement l'équation suivante en y :

$$\frac{Q(y)}{Q(r)} = 0.8$$

c étant une fonction strictement positive, Q est donc une fonction strictement croissante et cette équation possède une seule solution qui est l'épaisseur de croûte.

La figure 2 montre un exemple de quantité cumulée.

Définition de la densité de particules de palladium.

La densité de particules de palladium est nommée De.

Les mesures de dispersions métalliques sont effectuées par chimisorption de monoxyde de carbone CO, sur le catalyseur préalablement réduit sous 1 litre d'hydrogène par heure et par gramme de catalyseur, avec une montée en température de 300°C/h et un palier de deux heures à 150°C. Le catalyseur est ensuite balayé pendant 1 heure à 150°C sous hélium puis refroidi jusqu'à 25°C sous hélium.

La chimisorption de CO est réalisée à 25°C en dynamique selon les pratiques habituelles connues de l'homme du métier, elle conduit à un volume de CO chimisorbé, à partir duquel l'homme du métier peut calculer le nombre de molécules de CO chimisorbés.

Un rapport stoechiométrique d'une molécule de CO par atome de Pd de surface est pris en compte pour calculer le nombre d'atomes de Pd de surface. La dispersion est exprimée en % d'atomes de Pd de surface par rapport à la totalité des atomes de Pd présent dans l'échantillon du catalyseur.

La taille moyenne des cristallites est déduite de ces mesures de dispersion, en appliquant les relations dispersion-taille de particules connues de l'homme du métier et décrites dans "Analyse physico-chimique des catalyseurs industriels, Chapitre I, Éditions Technip, Paris 2001".

Le nombre d'atomes de Pd par particule métallique en fonction de la taille de la particule est déterminé par le modèle de Van Hardeveld et Hartog (R. Van Hardeveld, F. Hartog, Surf. Sci., 15 (1969) 189).

Dans le cas d'une bille de support de volume Vt et de rayon r dans laquelle le palladium est présent sous la forme d'une croûte d'épaisseur e, la densité de particules de palladium, est obtenue par la formule suivante:

$$De = \frac{(\%Pd).N_a}{S_{BET}.M_{Pd}.n_{Pd}.10^{14}} \frac{V_t}{V_c} \quad (1)$$

De : Densité de particules (en nombre de particules de palladium par $\mu m^2$)
%Pd : Teneur massique en Pd (gramme de Pd pour 100 grammes de catalyseur)
$N_a$ : Nombre d'Avogadro ($6,022.10^{23}$ atomes/mole)
$S_{BET}$ : Surface spécifique du support (en $m^2/g$)

$M_{Pd}$ : Masse molaire du palladium (106,42 g/mole)

$n_{Pd}$ : nombre d'atomes de palladium par particule de palladium.

$V_t$ : Volume total de la bille de support en mm$^3$

$V_t = 4/3.\pi.r^3$ (r étant le rayon de la bille)

$V_c$ : Volume de la croûte en mm$^3$

$V_c = V_t - 4/3.\pi.(r-e)^3$ (e étant l'épaisseur de la croûte)

L'homme du métier peut calculer la densité de particules de palladium par une formule mathématique dépendant de la forme du support considéré. Ainsi, pour un support dont la forme est différente d'une bille, l'équation (1) est toujours valable, mais les formules pour calculer $V_t$ et $V_c$ doivent être adaptées par l'homme du métier en fonction de la géométrie du support.

### Procédé de préparation du catalyseur

L'invention concerne un procédé de préparation du catalyseur comprenant les étapes suivantes:

- une étape a) de préparation dans un appareillage d'une suspension colloïdale d'oxyde de palladium ou d'hydroxyde de palladium en phase aqueuse par mélange d'une solution aqueuse 1 comprenant au moins un hydroxyde sélectionné dans le groupe constitué par les hydroxydes d'alcalins et les hydroxydes d'alcalino-terreux et d'une solution aqueuse 2 comprenant au moins un sel précurseur du palladium, la solution 2 puis la solution 1 étant versées dans l'appareillage ou les solutions 1 et 2 étant versées simultanément dans l'appareillage, la température de préparation étant comprise entre 5°C et 40°C, le pH de ladite suspension colloïdale étant compris entre 1,0 et 3,5, le temps de séjour de ladite suspension colloïdale dans l'appareillage étant compris entre 0 et 20 heures.

- une étape b) de préparation d'un support imprégné par imprégnation de ladite suspension colloïdale sur un support de surface spécifique comprise entre 50 et 210 m$^2$/g, le volume de la suspension colloïdale étant compris entre 0,9 et 1,1 fois le volume poreux du support.

- une étape c) de préparation d'un précurseur de catalyseur par maturation entre 0,5 et 40 heures dudit support imprégné.

- une étape d) de préparation d'un précurseur séché par séchage dudit précurseur de catalyseur obtenu à l'étape c), entre 70°C et 200°C, sous air de combustion d'un hydrocarbure, de préférence le méthane, ou sous air chauffé, lesdits airs comprenant entre 0 et 80 gramme d'eau par kilogramme d'air, un taux d'oxygène compris entre 5% et 25% volume et un taux de dioxyde de carbone compris entre 0% et 10% volume.

- une étape e) de préparation d'un catalyseur par calcination sous air de combustion d'un hydrocarbure, de préférence du méthane, du précurseur séché obtenu à l'étape d), la température de calcination étant comprise entre 300°C et 500°C, ledit air de combustion d'un hydrocarbure comprenant entre 40 et 80 gramme d'eau par kilogramme d'air de combustion, un taux d'oxygène compris entre 5% et 15% volume et un taux de dioxyde de carbone compris entre 4% et 10% volume

- une étape f) de réduction du catalyseur obtenu à l'étape e), cette réduction étant réalisée en présence d'hydrogène gazeux et à une température comprise entre 80°C et 180°C

Selon une première variante de ce procédé, le pH, le temps de séjour de la suspension colloïdale et la surface spécifique du support sont fixés dans leurs intervalles respectifs. La teneur en palladium comprise entre 0,05 et 2 % poids est alors ajustée afin d'obtenir une densité de particules de palladium dans la croûte comprise entre 1500 et 4100 particules de palladium par $\mu m^2$.

Selon une deuxième variante de ce procédé, la teneur en palladium comprise entre 0,05 et 2 % poids, le temps de séjour de la suspension colloïdale, la surface spécifique du support sont fixés dans leurs intervalles respectifs. Le pH est alors ajusté afin d'obtenir une densité de particules de palladium dans la croûte comprise entre 1500 et 4100 particules de palladium par $\mu m^2$.

### a) préparation d'une suspension colloïdale d'oxyde de palladium ou d'hydroxyde de palladium en phase aqueuse

La suspension colloïdale est généralement obtenue par hydrolyse du cation palladium en milieu aqueux, ce qui conduit à la formation de particules d'oxydes ou d'hydroxydes de palladium en suspension.

La solution aqueuse d'hydroxydes d'alcalins ou d'hydroxydes alcalino-terreux est généralement sélectionné dans le groupe constitué par les solutions aqueuses de soude, les solutions aqueuses d'hydroxyde de magnésium, de manière encore plus préféré, c'est une solution aqueuse de soude.

Le sel précurseur du palladium est généralement sélectionné dans le groupe constitué par le chlorure de palladium, le nitrate de palladium et le sulfate de palladium. De manière très préférée, le sel précurseur du palladium est le nitrate de palladium.

La solution aqueuse 2 comprenant au moins un sel précurseur du palladium puis la solution aqueuse 1 comprenant au moins un hydroxyde d'alcalins ou d'alcalino-terreux sont généralement versé dans l'appareillage. Les solutions 1 et 2 peuvent être versées simultanément dans l'appareillage. De préférence, la solution aqueuse 2 puis la solution aqueuse 1 sont versées dans l'appareillage.

La suspension colloïdale reste généralement dans l'appareillage pendant un temps de séjour compris entre 0 et 20 heures. Le pH de la suspension colloïdale peut être modifié pendant ce temps de séjour par ajout de quantités d'acide ou de base compatibles avec la stabilité de la suspension colloïdale.

En général, la température de préparation est comprise entre 5°C et 40°C et de manière préférée entre 15°C et 35°C. La concentration en palladium est de préférence comprise entre 5 et 150 millimoles par litres, de manière plus préférée entre 8 et 80 millimoles par litre.

Les concentrations des solutions 1 et 2 sont généralement choisies afin d'obtenir un pH de la suspension colloïdale compris entre pH = 1,0 et pH = 3,5.

b) dépôt de la suspension colloïdale préparée à l'étape a) par imprégnation sur un support, de préférence sur de l'alumine

La suspension colloïdale préparée à l'étape a) est ensuite imprégnée sur un support.

Le support peut éventuellement subir un ensemble de traitements avant l'étape d'imprégnation, tel que des calcinations ou des hydratations. Le support, peut aussi déjà comprendre un ou plusieurs éléments métalliques avant l'imprégnation de la suspension colloïdale. Des éléments métalliques peuvent aussi être introduits dans la suspension colloïdale. Ces éléments métalliques peuvent être introduits soit par des techniques conventionnelles, soit en utilisant le procédé selon la présente invention.

La suspension colloïdale est de préférence versée sur le support. Ce processus peut être réalisé soit de façon discontinue, c'est-à-dire que l'étape de préparation de la suspension colloïdale précède l'étape d'imprégnation sur le support et que l'essentiel de la suspension colloïdale est envoyée en une seule fois vers l'étape d'imprégnation, soit en continu, c'est-à-dire que le produit obtenu dans l'étape a) est envoyé en continu après ajustement du temps de séjour de la suspension colloïdale à l'étape b).

On peut par exemple citer comme processus continu, un processus où les solutions 1 et 2 sont versées simultanément dans un bac qui se déverse en continu dans une zone comprenant le support à imprégner.

c) maturation du support imprégné lors de l'étape b) pendant une durée comprise entre 0,5 et 40 heures

Après imprégnation, le support imprégné est généralement maturé à l'état humide pendant 0,5 à 40 heures, de manière préférée pendant 1 à 30 heures.

d) séchage du précurseur de catalyseur obtenu à l'étape c)

Le précurseur du catalyseur est généralement séché afin d'éliminer toute ou une partie de l'eau introduite lors de l'imprégnation, de préférence à une température comprise entre 50 et 250°C, de manière plus préférée entre 70°C et 200°C.

Le séchage est généralement effectué sous air de combustion d'un hydrocarbure, de préférence du méthane, ou sous air chauffé comprenant entre 0 et 80 gramme d'eau par kilogramme d'air de combustion, un taux d'oxygène compris entre 5% et 25% volume et un taux de dioxyde de carbone compris entre 0% et 10% volume.

e) calcination sous air de combustion du catalyseur séché obtenu à l'étape d)

Après séchage le catalyseur est généralement calciné sous air de combustion, de préférence une air de combustion du méthane comprenant entre 40 et 80 gramme d'eau par kg d'air de combustion, un taux d'oxygène compris entre 5% et 15% volume et un taux de $CO_2$ compris entre 4% et 10% volume. La température de calcination est généralement comprise entre 250°C et 900°C, de préférence comprise entre environ 300°C et environ 500°C. La durée de calcination est généralement comprise entre 0,5 heures et 5 heures.

f) réduction de l'oxyde ainsi supporté obtenu à l'étape e), de préférence au moyen d'hydrogène gazeux.

Le catalyseur est généralement réduit. Cette étape est de préférence réalisée en présence d'un gaz réducteur, soit in-situ, c'est-à-dire dans le réacteur où est réalisée la transformation catalytique, soit ex-situ. De manière préférée, cette étape est effectuée à une température comprise entre 80°C et 180°C, de manière encore plus préférée entre 100°C et 160°C.

La réduction est réalisée en présence d'un gaz réducteur comprenant entre 25 vol% et 100 vol% d'hydrogène, de préférence 100% volume d'hydrogène. L'hydrogène est éventuellement complété par un gaz inerte pour la réduction, de préférence de l'argon, de l'azote ou du méthane.

La réduction comprend généralement une phase de montée en température puis un palier.

La durée du palier de réduction est généralement comprise entre 1 et 10 heures, de préférence entre 2 et 8 heures.

La WH est généralement comprise entre 150 et 1000, de préférence entre 300 et 900 litres de gaz réducteur par heure et par litres de catalyseurs.

Selon une variante, le catalyseur peut contenir un ou plusieurs métaux promoteurs. Le ou les métaux promoteurs peuvent être introduit lors de la préparation du support, sur le support déjà formé, pendant l'étape a) ou à l'issue des étapes b) c) d) e) ou f).

Utilisation du catalyseur

Le catalyseur obtenue avec le procédé selon l'invention peut être utilisé dans les procédés faisant intervenir une transformation de composés organiques. Ainsi, le catalyseur peut être utilisé dans les procédés comprenant des réactions d'hydrogénation des composés comportant des fonctions aromatiques, cétones, aldéhydes, acides ou nitro, l'hydrogénation du monoxyde de carbone en alcools C1-C6, en méthanol ou en diméthyl-éther, les réactions d'isomérisation ou d'hydro-isomérisation, d'hydrogénolyse, et d'une manière générale les réactions faisant intervenir des coupures ou des formations de liaisons carbone-carbone.

Les conditions opératoires généralement utilisées pour ces réactions sont les suivantes: une température comprise entre 0°C et 500°C, de préférence entre 25 et 350°C, une pression comprise entre 0,1 et 20 MPa, de préférence entre 0,1 et 10 MPa, une vitesse volumique horaire (V.V.H.) comprise entre 0,1 et 50 h$^{-1}$, de préférence entre 0,5 et 20 h$^{-1}$ pour une charge liquide; et entre 500 et 30 000 h$^{-1}$, de préférence entre 500 et 15 000 h$^{-1}$ pour une charge gazeuse. Lorsque de l'hydrogène est présent, le rapport molaire hydrogène sur charge est compris entre 1 et 500 litres par litre, de préférence entre 10 et 150 litres par litre.

La mise en oeuvre du catalyseur selon l'invention et les conditions de son utilisation doivent être adaptées par l'utilisateur à la réaction et à la technologie utilisée.

Le catalyseur peut aussi être utilisé dans les réactions d'hydrogénation des composés comportant des fonctions acétyléniques, diéniques, oléfiniques.

Selon une application préférée, les catalyseurs obtenues avec le procédé selon l'invention sont mise en oeuvre pour les réactions d'hydrogénation sélective des coupes poly-insaturées d'hydrocarbures issues de vapocraquage et/ou de craquage catalytique, de préférence des coupes poly-insaturées d'hydrocarbures issues du vapocraquage.

L'hydrogénation des coupes C3 à C5

Les procédés de conversion des hydrocarbures tels que le vapocraquage ou le craquage catalytique sont opérés à haute température et produisent une grande variété de molécules insaturées telles que l'éthylène, le propylène, les butènes linéaires, l'isobutène, les pentènes ainsi que des molécules insaturés contenant jusqu'à environ 15 atomes de carbone.

En parallèle sont également formés des composés polyinsaturés: acétylène, propadiène et méthylacétylène (ou propyne), 1-2 et 1-3 butadiène, vinylacétylène et éthylacétylène, et d'autres composés polyinsaturés dont le point d'ébullition correspond à la fraction essence C5+.

Tous ces composés polyinsaturés doivent être éliminés pour permettre l'utilisation de ces différentes coupes dans les procédés de pétrochimie tels que les unités de polymérisation.

Ainsi, par exemple, la coupe C3 de vapocraquage peut avoir la composition moyenne suivante : de l'ordre de 90% poids propylène, de l'ordre de 3 à 8% poids de propadiène et méthylacétylène, le reste étant essentiellement du propane. Dans certaines coupes C3, entre 0,1 et 2% poids de C2 et de C4 peut aussi être présent. Les spécifications concernant les concentrations de ces composés polyinsaturés pour les unités de pétrochimie et de polymérisation sont très basses : 20-30 ppm poids de MAPD (MéthylAcétylène et PropaDiène) pour le propylène qualité chimique et moins de 10 ppm poids voire jusqu'à 1 ppm poids pour la qualité « polymérisation ».

Une coupe C4 de vapocraquage présente par exemple la composition molaire moyenne suivante : 1 % de butane, 46,5% de butène, 51% de butadiène, 1,3% de VinylAcetylène (VAC) et 0,2% de butyne. Dans certaines coupes C4, entre 0,1 et 2% poids de C3 et de C5 peut aussi être présent. La encore les spécifications sont sévères : teneur en dioléfines strictement inférieure à 10 ppm poids pour une coupe C4 qui sera utilisée en pétrochimie ou polymérisation.

Une coupe C5 de vapocraquage présente par exemple la composition moyenne en masse suivante : 21% de pentanes, 45% de pentènes, 34% de pentadiènes.

Le procédé d'hydrogénation sélective s'est progressivement imposé pour éliminer les composés polyinsaturés des coupes pétrolières C3 à C5 citées car ce procédé permet la conversion des composés les plus insaturés vers les alcènes correspondants en évitant la saturation totale et donc la formation des alcanes correspondant.

L'hydrogénation sélective peut être réalisée en phase gaz ou liquide, de préférence en phase liquide. En effet, une réaction en phase liquide permet d'abaisser le coût énergétique et d'augmenter la durée de cycle des catalyseurs.

Pour une réaction en phase liquide, la pression est généralement comprise entre 1 et 3 MPa, la température entre 2 et 50°C et le ratio molaire hydrogène/(composés polyinsaturés à hydrogéner) entre 0,1 et 4, de préférence entre 1 et 2.

Pour une réaction d'hydrogénation en phase gazeuse, la pression est généralement comprise entre 1 et 3 MPa, la température entre 40 et 120°C et le ratio molaire hydrogène/(composés polyinsaturés à hydrogéner) entre 0,1 et 4, de préférence entre 1 et 2.

L'hydrogénation des essences de vapocraquage

Le vapocraquage produit principalement de l'éthylène, du propylène, une coupe C4 ainsi que de l'essence de vapocraquage appelée aussi essence de pyrolyse.

Selon un autre mode préféré, la charge est une essence de pyrolyse. L'essence de pyrolyse correspond à une coupe dont la température d'ébullition est généralement comprise entre 0°C et 250°C, de préférence entre 10°C et 220°C. Cette charge comprend généralement la coupe C5-C12 avec des traces de C3, C4, C13, C14, C15 (par exemple entre 0,1 à 3% poids pour chacune de ces coupes).

Par exemple, une coupe C5-200°C a généralement une composition en % poids suivante:

Paraffines 8 - 12
Aromatiques 58 - 62
Mono-oléfines 8 - 10
Dioléfines 18 - 22
Soufre 20 - 300 ppm

L'hydrogénation sélective d'une essence de pyrolyse consiste à mettre en contact la charge à traiter avec de l'hydrogène introduit en excès dans un ou plusieurs réacteurs contenant le catalyseur d'hydrogénation.

Le débit d'hydrogène est ajusté afin d'en disposer en quantité suffisante pour hydrogéner théoriquement l'ensemble des dioléfines, des acétyléniques et des alkényl aromatiques et de maintenir un excès d'hydrogène en sortie de réacteur. Afin de limiter le gradient de température dans le réacteur, il peut être avantageux de recycler une fraction de l'effluent à l'entrée et/ou au milieu du réacteur.

Dans le cas d'une hydrogénation sélective d'essence de pyrolyse, le ratio molaire hydrogène/(composés polyinsaturés à hydrogéner) est généralement compris entre 1 et 2, la température est généralement comprise entre 40°C et 200°C, de préférence entre 50 et 180°C, la vitesse horaire spatiale (correspondant au volume d'hydrocarbure par volume de catalyseur et par heure) est comprise généralement entre 0,5 h-1 et 10 h-1 , de préférence entre 1 h-1 et 5 h-1 et la pression est généralement comprise entre 1,0 MPa et 6,5 MPa, de préférence entre 2,0 MPa et 3,5 MPa.

**EXEMPLES**

Les suspensions colloïdales sont préparées à 25°C dans tous les exemples qui suivent.

Exemple 1 (Catalyseur A non conforme)

Une solution aqueuse de nitrate de palladium $Pd(NO_3)_2$ est préparée à 25°C par dilution de 3,5 g d'une solution de nitrate de palladium $Pd(NO_3)_2$ contenant 8,5 % poids de palladium, avec de l'eau déminéralisée à un volume qui correspond au volume poreux du support alumine. Le pH de la solution est 0,7.

Cette solution est ensuite imprégnée sur 100 gramme d'une alumine de type $\delta$ - $Al_2O_3$ dont la $S_{BET}$ est de 130 $m^2$/g. Cette alumine est sous forme de billes dont le diamètre moyen est de 3 mm.

Le catalyseur A obtenu est séché sous air à 120°C, puis est calciné pendant 2 heures à 450°C sous un flux d'air de combustion avec une WH de 500 litres d'air de combustion par litre de catalyseur et par heure. L'air de combustion contient environ 60 g d'eau par kg d'air, 10 % en volume d'oxygène et 7 % en volume de dioxyde de carbone. Le catalyseur A contient 0,3% Pd.

La caractérisation du catalyseur par microsonde de Castaing conduit à 80 % du Pd situé dans une croûte d'épaisseur 250 $\mu$m.

Avant la chimisorption de CO et le test catalytique, le catalyseur est finalement réduit sous un flux d'hydrogène de WH 500 litres d'hydrogène par litre de catalyseur et par heure, avec une vitesse de montée en température de 300°C/h et un palier à 150°C pendant 2 heures.

Le volume de CO chimisorbé est de 0,365 ml/g, soit une dispersion métallique de 53%, ce qui correspond à une taille moyenne de particule de 2,3 nm, soit à 440 atomes de Pd / particule.

Ces données permettent de calculer une densité moyenne de particules de Pd de l'ordre de 697 particules de Pd / $\mu$m$^2$ de croûte.

Exemple 2a : (catalyseur Ba non conforme)

Le temps de séjour de la suspension colloïdale dans l'appareillage avant imprégnation est de 15 minutes pour les exemples 2a, 2b et 3 qui suivent.

Une suspension colloïdale d'oxyde de Pd est préparée sous agitation à 25°C par dilution de 3,5 g d'une solution de nitrate de palladium Pd(NO$_3$)$_2$ contenant 8,5 % poids de palladium Pd avec environ 20 ml d'eau déminéralisé, puis ajout d'environ 10 ml d'une solution de soude pour arriver à un pH de 1,6. La suspension est ensuite diluée avec de l'eau déminéralisée à un volume qui correspond au volume poreux du support alumine.

Cette solution est ensuite imprégnée sur 59g d'une alumine de type $\delta$ - Al$_2$O$_3$ dont la S$_{BET}$ est de 130 m$^2$/g. Cette alumine est sous forme de billes dont le diamètre moyen est de 3 mm.

Le catalyseur Ba obtenu est séché sous air à une WH de 500 litres d'air par litre de catalyseur et par heure, avec une montée en température de 25°C à 120°C de 8 heures, suivi d'un palier de 2 heures à 120°C. Le catalyseur est ensuite calciné sous un flux d'air de combustion à une WH de 500 litres d'air de combustion par litre de catalyseur et par heure, avec une vitesse de montée en température d'environ 300°C par heure, suivi d'un palier de 2 heures à 450°C. L'air de combustion contient environ 60 g d'eau par kg d'air, 10 % en volume d'oxygène et 7 % en volume de dioxyde de carbone.

Le catalyseur Ba contient 0,5% Pd.

La caractérisation du catalyseur par microsonde de Castaing permet de calculer une croûte d'épaisseur d'environ 91 $\mu$m. Le Na est réparti sur toute la bille avec un coefficient de répartition R(Na)=0,7, ce qui traduit une répartition non homogène du sodium.

Avant la chimisorption de CO et le test catalytique, le catalyseur est finalement réduit sous un flux d'hydrogène de WH 500 litres d'hydrogène par litre de catalyseur et par heure, avec une vitesse de montée en température de 300°C/h et un palier à 150°C pendant 2 heures.

Le volume de CO chimisorbé est de 0,583 ml/g, soit une dispersion métallique de 51%, ce qui correspond à une taille de particules de environ 2,4 nm, soit 490 atomes de Pd/particule.

Ces données permettent de calculer une densité moyenne de particules de Pd de l'ordre de 2604 particules de Pd / $\mu$m$^2$ de croûte.

Exemple 2b : (catalyseur Bb non conforme)

Pour une imprégnation à sec de 59 g d'alumine, une suspension colloïdale d'oxyde de Pd est préparée sous agitation à 25°C par dilution de 3,5 g d'une solution de nitrate de palladium Pd(NO$_3$)$_2$ contenant 8,5 % poids de palladium Pd avec environ 10 ml d'eau déminéralisé, puis ajout dans environ 20 ml d'une solution de soude pour arriver à un pH de 12,1. La suspension est ensuite diluée avec de l'eau déminéralisée à un volume qui correspond au volume poreux du support alumine.

Cette solution est ensuite imprégnée sur 59g d'une alumine de type $\delta$ - Al$_2$O$_3$ dont la S$_{BET}$ est de 130 m$^2$/g. Cette alumine est sous forme de billes dont le diamètre moyen est de 3 mm.

Le catalyseur Bb obtenu est séché sous air à une WH de 500 litres d'air par litre de catalyseur et par heure, avec une montée en température de 25°C à 120°C de 8 heures, suivi d'un palier de 2 heures à 120°C. Le catalyseur est ensuite calciné sous un flux d'air de combustion à une WH de 500 litres d'air de combustion par litre de catalyseur et par heure, avec une vitesse de montée en température d'environ 300°C par heure, suivi d'un palier de 2 heures à 450°C. L'air de combustion contient environ 60 g d'eau par kg d'air, 10 % en volume d'oxygène et 7 % en volume de dioxyde de carbone.

Le catalyseur Bb contient 0,5% Pd.

La caractérisation du catalyseur par microsonde de Castaing conduit à 80 % du Pd situé sur une croûte d'épaisseur environ 74 $\mu$m. Le Na est réparti de façon non homogène avec un coefficient de répartition R(Na)=0,65

Avant la chimisorption de CO et le test catalytique, le catalyseur est finalement réduit sous un flux d'hydrogène de VVH 500 litres d'hydrogène par litre de catalyseur et par heure, avec une vitesse de montée en température de 300°C/h et un palier à 150°C pendant 2 heures.

Le volume de CO chimisorbé est de 0,551 ml/g, soit une dispersion métallique de 48%, ce qui correspond à une taille de particules de environ 2,5 nm, soit environ 536 atomes de Pd/particule.

Ces données permettent de calculer une densité moyenne de particules de Pd de l'ordre de 2894 particules de Pd / $\mu m^2$ de croûte.

Exemple 3 : (catalyseur C conforme)

Une suspension colloïdale d'oxyde de Pd est préparée sous agitation à 25°C par dilution de 3,5 g d'une solution de nitrate de palladium $Pd(NO_3)_2$ contenant 8,5 % poids de palladium Pd avec environ 20 ml d'eau déminéralisé, puis ajout d'environ 10 ml d'une solution de soude pour arriver à un pH de 1,7. La suspension est ensuite diluée avec de l'eau déminéralisée à un volume qui correspond au volume poreux de 59 g du support alumine.

Cette solution est ensuite imprégnée sur 59g d'une alumine de type $\delta$ - $Al_2O_3$ dont la $S_{BET}$ est de 130 $m^2$/g. Cette alumine est sous forme de billes dont le diamètre moyen est de 3 mm.

Une étape de maturation du support imprégné avant séchage d'une durée de 20 heures est effectuée sous air en milieu confiné et humide.

Le catalyseur C obtenu est séché sous air à une WH de 500 litres d'air par litre de catalyseur et par heure, avec une montée en température de 25°C à 120°C de 8 heures, suivi d'un palier de 2 heures à 120°C. Le catalyseur est ensuite calciné sous un flux d'air de combustion à une WH de 500 litres d'air de combustion par litre de catalyseur et par heure, avec une vitesse de montée en température d'environ 300°C par heure, suivi d'un palier de 2 heures à 450°C. L'air de combustion contient environ 60 g d'eau par kg d'air, 10 % en volume d'oxygène et 7 % en volume de dioxyde de carbone.

Le catalyseur C contient 0,5% Pd.

La caractérisation du catalyseur par microsonde de Castaing conduit à 80 % du Pd sur une croûte d'épaisseur environ 75 $\mu m$.

Le Na est réparti sur toute la bille avec un coefficient de répartition R(Na)=0,99, ce qui traduit une répartition du Na homogène sur toute la bille sans excès de Na en croûte.

Avant la chimisorption de CO et le test catalytique, le catalyseur est finalement réduit sous un flux d'hydrogène de WH 500 litres d'hydrogène par litre de catalyseur et par heure, avec une vitesse de montée en température de 300°C/h et un palier à 150°C pendant 2 heures.

Le volume de CO chimisorbé est de 0,576 ml/g, soit une dispersion métallique de 50%, ce qui correspond à une taille de particules de environ 2,4 nm, soit environ 490 atomes de Pd/particule.

Ces données permettent de calculer une densité moyenne de particules de Pd de l'ordre de 3125 particules de Pd / $\mu m^2$ de croûte.

Exemple 4: Test catalytique en hydrogénation d'un mélange styrène isoprène en présence de S.

Avant le test catalytique, 2 g des différents catalyseurs préparés dans les exemples 1 à 3 sont traités sous un flux de 1 litre d'hydrogène par heure et par gramme de catalyseur, avec une montée en température de 300°C/h et un palier à 150°C pendant 2 heures.

Les catalyseurs sont ensuite soumis à un test d'hydrogénation dans un réacteur discontinu parfaitement agité de type « Grignard ». Pour ce faire, les billes de catalyseur réduit sont fixées à l'abri de l'air dans un panier annulaire situé autour du mobile d'agitation. Les paniers utilisés dans les réacteurs sont de type Robinson Mahonnay.

L'hydrogénation est réalisée en phase liquide.

La composition de la charge est la suivante : 8% poids styrène, 8% poids isoprène, 10 ppm de S introduits sous forme de pentanethiol, 100 ppm de S introduits sous forme de thiophène, le solvant étant du n-heptane.

Le test se fait sous une pression constante de 3,5 MPa d'hydrogène et à une température de 45°C. Les produits de la réaction sont analysés par chromatographie en phase gazeuse.

Les activités catalytiques sont exprimées en moles de $H_2$ consommées par minute et par mole de Pd accessible et sont reportées dans le tableau 1.

Tableau 1: Activités mesurées en hydrogénation d'un mélange styrène-isoprène en présence de soufre

|  | Activité* |
|---|---|
| Catalyseur A (non conforme) | 76 |

(suite)

| | Activité* |
|---|---|
| Catalyseur Ba (non conforme) | 140 |
| Catalyseur Bb (non conforme) | 110 |
| Catalyseur C (selon invention) | 177 |
| * en (moles $H_2$)/[min$\times$(mole de Pd accessible)] | |

Les catalyseurs Ba et Bb qui possèdent une densité de particules de Pd comprise dans la gamme définie possèdent une activité catalytique intrinsèque nettement supérieure à celle du catalyseur A dont la densité de particules de Pd est plus faible que la gamme définie.

Le catalyseur C qui possède à la fois une densité comprise dans la gamme définie et une répartition homogène du Na au sein de la bille possède une activité catalytique nettement supérieure à l'activité des catalyseurs Ba et Bb dont la densité de particule est comprise dans la gamme définie mais dont la répartition du Na n'est pas homogène au sein de la bille de catalyseur.

Exemple 5 : Catalyseur D (non conforme)

Le temps de séjour de la suspension colloïdale dans l'appareillage avant imprégnation est de 30 minutes pour les exemples 5 à 8.

Une suspension colloïdale d'oxyde de Pd est préparée sous agitation à 25°C par dilution de 0,58 g d'une solution de nitrate de palladium Pd($NO_3$)$_2$ contenant 8,5 % poids de palladium Pd avec environ 35 ml d'eau déminéralisé, puis ajout d'environ 10 ml d'une solution de soude pour arriver à un pH de 2,3. La suspension est ensuite diluée avec de l'eau déminéralisée à un volume qui correspond au volume poreux du support alumine.

Cette solution est ensuite imprégnée sur 90g d'une alumine de type $\delta$ - $Al_2O_3$ dont la $S_{BET}$ est de 130 $m^2$/g. Cette alumine est sous forme de billes dont le diamètre moyen est de 3 mm.

Une étape de maturation du support imprégné avant séchage d'une durée de 20 heures est effectuée sous air en milieu confiné et humide.

Le catalyseur D obtenu est séché sous air à une WH de 500 litres d'air par litre de catalyseur et par heure, avec une montée en température de 25°C à 120°C de 8 heures, suivi d'un palier de 2 heures à 120°C. Le catalyseur est ensuite calciné sous un flux d'air de combustion à une WH de 500 litres d'air de combustion par litre de catalyseur et par heure, avec une vitesse de montée en température d'environ 300°C par heure, suivi d'un palier de 2 heures à 450°C. L'air de combustion contient environ 60 g d'eau par kg d'air, 10 % en volume d'oxygène et 7 % en volume de dioxyde de carbone.

Le catalyseur D contient 0,055% Pd.

La caractérisation du catalyseur par microsonde de Castaing montre que 80% du Pd sont répartis sur une croûte d'épaisseur environ 27 $\mu$m. Le Na est réparti de façon homogène avec un coefficient de répartition R(Na)=0,89.

Avant la chimisorption de CO et le test catalytique, le catalyseur est finalement réduit sous un flux d'hydrogène de VVH 500 litres d'hydrogène par litre de catalyseur et par heure, avec une vitesse de montée en température de 300°C/h et un palier à 150°C pendant 2 heures.

Le volume de CO chimisorbé est de 0,071 ml/g, soit une dispersion métallique de 56 %, ce qui correspond à une taille de particules de environ 2,1 nm, soit 340 atomes de Pd/particules.

Ces données permettent de calculer une densité moyenne de particules de Pd de l'ordre de 1322 particules de Pd / $\mu$m$^2$ de croûte.

Exemple 6 : Catalyseur E (conforme)

Une suspension colloïdale d'oxyde de Pd est préparée sous agitation à 25°C par dilution de 1,16 g d'une solution de nitrate de palladium Pd($NO_3$)$_2$ contenant 8,5 % poids de palladium Pd avec environ 40 ml d'eau déminéralisé, puis ajout d'environ 10 ml d'une solution de soude pour arriver à un pH de 2,3. La suspension est ensuite diluée avec de l'eau déminéralisée à un volume qui correspond au volume poreux du support alumine.

Cette solution est ensuite imprégnée sur 102g d'une alumine de type $\delta$ - $Al_2O_3$ dont la $S_{BET}$ est de 130 $m^2$/g. Cette alumine est sous forme de billes dont le diamètre moyen est de 3 mm.

Une étape de maturation du support imprégné avant séchage d'une durée de 20 heures est effectuée sous air en milieu confiné et humide.

Le catalyseur E obtenu est séché sous air à une VVH de 500 litres d'air par litre de catalyseur et par heure, avec une montée en température de 25°C à 120°C de 8 heures, suivi d'un palier de 2 heures à 120°C. Le catalyseur est ensuite calciné sous un flux d'air de combustion à une WH de 500 litres d'air de combustion par litre de catalyseur et par heure, avec une vitesse de montée en température d'environ 300°C par heure, suivi d'un palier de 2 heures à 450°C. L'air de combustion contient environ 60 g d'eau par kg d'air, 10 % en volume d'oxygène et 7 % en volume de dioxyde de carbone.

Le catalyseur E contient 0,097% Pd.

La caractérisation du catalyseur par microsonde de Castaing montre que 80% du Pd sont répartis sur une croûte d'épaisseur environ 30 $\mu$m. Le Na est réparti de façon homogène avec un coefficient de répartition R(Na)=0,85.

Avant la chimisorption de CO et le test catalytique, le catalyseur est finalement réduit sous un flux d'hydrogène de WH 500 litres d'hydrogène par litre de catalyseur et par heure, avec une vitesse de montée en température de 300°C/h et un palier à 150°C pendant 2 heures.

Le volume de CO chimisorbé est de 0,127 ml/g, soit une dispersion métallique de 57 %, ce qui correspond à une taille de particules de environ 2,1 nm, soit 340 atomes de Pd/particules.

Ces données permettent de calculer une densité moyenne de particules de Pd de l'ordre de 2103 particules de Pd / $\mu$m$^2$ de croûte.

Exemple 7 : Catalyseur F (conforme)

Une suspension colloïdale d'oxyde de Pd est préparée sous agitation à 25°C par dilution de 2,3 g d'une solution de nitrate de palladium Pd(NO$_3$)$_2$ contenant 8,5 % poids de palladium Pd avec environ 45 ml d'eau déminéralisé, puis ajout d'environ 10 ml d'une solution de soude pour arriver à un pH de 2,4. La suspension est ensuite diluée avec de l'eau déminéralisée à un volume qui correspond au volume poreux du support alumine.

Cette solution est ensuite imprégnée sur 111g d'une alumine de type $\delta$ - Al$_2$O$_3$ dont la S$_{BET}$ est de 130 m$^2$/g. Cette alumine est sous forme de billes dont le diamètre moyen est de 3 mm.

Une étape de maturation du support imprégné avant séchage d'une durée de 20 heures est effectuée sous air en milieu confiné et humide.

Le catalyseur F obtenu est séché sous air à une VVH de 500 litres d'air par litre de catalyseur et par heure, avec une montée en température de 25°C à 120°C de 8 heures, suivi d'un palier de 2 heures à 120°C. Le catalyseur est ensuite calciné sous un flux d'air de combustion à une WH de 500 litres d'air de combustion par litre de catalyseur et par heure, avec une vitesse de montée en température d'environ 300°C par heure, suivi d'un palier de 2 heures à 450°C. L'air de combustion contient environ 60 g d'eau par kg d'air, 10 % en volume d'oxygène et 7 % en volume de dioxyde de carbone.

Le catalyseur F contient 0,176% Pd.

La caractérisation du catalyseur par microsonde de Castaing montre que 80% du Pd sont répartis sur une croûte d'épaisseur environ 31 $\mu$m. Le Na est réparti de façon homogène avec un coefficient de répartition R(Na)=0,92.

Avant la chimisorption de CO et le test catalytique, le catalyseur est finalement réduit sous un flux d'hydrogène de VVH 500 litres d'hydrogène par litre de catalyseur et par heure, avec une vitesse de montée en température de 300°C/h et un palier à 150°C pendant 2 heures.

Le volume de CO chimisorbé est de 0,231 ml/g, soit une dispersion métallique de 57 %, ce qui correspond à une taille de particules de environ 2,1 nm, soit 340 atomes de Pd/particules.

Ces données permettent de calculer une densité moyenne de particules de Pd de l'ordre de 3707 particules de Pd / $\mu$m$^2$ de croûte.

Exemple 8 : Catalyseur G (non conforme)

Une suspension colloïdale d'oxyde de Pd est préparée sous agitation à 25°C par dilution de 3,45 g d'une solution de nitrate de palladium Pd(NO$_3$)$_2$ contenant 8,5 % poids de palladium Pd avec environ 55 ml d'eau déminéralisé, puis ajout d'environ 10 ml d'une solution de soude pour arriver à un pH de 2,4. La suspension est ensuite diluée avec de l'eau déminéralisée à un volume qui correspond au volume poreux du support alumine.

Cette solution est ensuite imprégnée sur 133g d'une alumine de type $\delta$ - Al$_2$O$_3$ dont la S$_{BET}$ est de 130 m$^2$/g. Cette alumine est sous forme de billes dont le diamètre moyen est de 3 mm.

Une étape de maturation du support imprégné avant séchage d'une durée de 20 heures est effectuée sous air en milieu confiné et humide.

Le catalyseur G obtenu est séché sous air à une WH de 500 litres d'air par litre de catalyseur et par heure, avec une montée en température de 25°C à 120°C de 8 heures, suivi d'un palier de 2 heures à 120°C. Le catalyseur est ensuite calciné sous un flux d'air de combustion à une WH de 500 litres d'air de combustion par litre de catalyseur et par heure, avec une vitesse de montée en température d'environ 300°C par heure, suivi d'un palier de 2 heures à 450°C. L'air de combustion contient environ 60 g d'eau par kg d'air, 10 % en volume d'oxygène et 7 % en volume de dioxyde de carbone.

Le catalyseur G contient 0,22 % Pd.

La caractérisation du catalyseur par microsonde de Castaing montre que 80% du Pd sont répartis sur une croûte d'épaisseur environ 30 $\mu$m. Le Na est réparti de façon non homogène avec un coefficient de répartition R(Na)=0,88.

Avant la chimisorption de CO et le test catalytique, le catalyseur est finalement réduit sous un flux d'hydrogène de WH 500 litres d'hydrogène par litre de catalyseur et par heure, avec une vitesse de montée en température de 300°C/h et un palier à 150°C pendant 2 heures.

Le volume de CO chimisorbé est de 0,287 ml/g, soit une dispersion métallique de 57 %, ce qui correspond à une taille de particules de environ 2,1 nm, soit 340 atomes de Pd/particules.

Ces données permettent de calculer une densité moyenne de particules de Pd de l'ordre de 4790 particules de Pd / $\mu$m$^2$ de croûte.

Exemple 9 : Test catalytique en hydrogénation du 1,3-butadiène.

Avant le test catalytique, environ 0,5g des différents catalyseurs préparés dans les exemples 5 à 8 sont broyés à une granulométrie de 63 - 100 microns, puis traités sous un flux de 1 litre d'hydrogène par heure et par gramme de catalyseur, avec une montée en température de 300°C/h et un palier à 150°C pendant 2 heures.

Les catalyseurs sont ensuite soumis à un test d'hydrogénation dans un réacteur discontinu parfaitement agité de type « Grignard ».

L'hydrogénation est réalisée en phase liquide.

La composition de la charge est 6,3% pds de 1,3-butadiène, le solvant étant du n-heptane. Le test se fait sous une pression constante de 0,5 MPa d'hydrogène et à une température de 5°C.

Les produits de la réaction sont analysés par chromatographie en phase gazeuse. Les activités catalytiques sont exprimées en moles de H$_2$ consommées par seconde et par mole de Pd accessible et sont reportées dans le tableau 2.

Tableau 2: Activités mesurées en hydrogénation du 1,3-butadiène

|  | Activité * |
|---|---|
| Catalyseur D (non conforme) | 15 |
| Catalyseur E (selon l'invention) | 33 |
| Catalyseur F (selon invention) | 31 |
| Catalyseur G (non conforme) | 23 |
| * en (moles H$_2$)/[s$\times$(mole métal de surface)] | |

Les catalyseurs E et F dont la densité de particules est comprise dans la gamme définie ont une activité catalytique intrinsèque supérieure d'un facteur 2 au catalyseur D dont la densité de particules de Pd est en dessous de la gamme définie, et supérieure d'un facteur 1,5 au catalyseur G dont la densité de particules de Pd est supérieure à la gamme définie.

**Revendications**

1.  Procédé de préparation d'un catalyseur comprenant du palladium, au moins un métal sélectionné dans le groupe constitué par les alcalins et les alcalino-terreux, un support poreux sous forme de billes comprenant au moins un oxyde réfractaire sélectionné dans le groupe constitué par la silice, l'alumine et la silice-alumine, dans lequel la surface spécifique du support poreux est comprise entre 50 et 210 m$^2$/g, la teneur en palladium dans le catalyseur est comprise entre 0,05 et 2 % poids, au moins 80 % poids de palladium est réparti dans une croûte à la périphérie du support, l'épaisseur de ladite croûte est comprise entre 20 et 200 $\mu$m, la dispersion métallique D exprimée en % d'atomes de palladium de surface par rapport à la totalité des atomes présent dans l'échantillon du catalyseur est comprise entre 25% et 70%, ladite dispersion métallique étant mesurée par chimisorption de monoxyde de carbone CO, la densité de particules de palladium dans la croûte est comprise entre 1500 et 4100 particules de palladium par $\mu$m$^2$, la somme des teneurs en métaux alcalins et/ou alcalino-terreux dans le catalyseur est comprise entre 0,05 et 5 % poids et ledit métal alcalin et/ou alcalino-terreux est réparti de manière homogène à travers le support avec un coefficient R compris entre 0,8 et 1,2, ledit coefficient R étant défini par la formule suivante :

$$R = \int_{-r}^{r} c(x)x^2\,dx \Big/ \frac{r^2}{3} \int_{-r}^{r} c(x)\,dx$$

avec le profil de répartition c(x) pour $x \in$[-r; +r] obtenu par la microsonde de Castaing, c la concentration locale de l'élément alcalin ou/alcalino-terreux, r le rayon de la bille, et X la position du point d'analyse le long du diamètre du grain par rapport au centre de ce grain, ladite densité de particules étant définie par la formule suivante:

$$De = \frac{(\%Pd).N_a}{S_{BET}.M_{Pd}.n_{Pd}.10^{14}} \frac{V_t}{V_c}$$

avec

%Pd la teneur massique en Pd (gramme de Pd pour 100 grammes de catalyseur),
$N_a$ le nombre d'Avogadro, $S_{BET}$ la surface spécifique du support (en m$^2$/g),
$M_{Pd}$ la masse molaire du palladium, $n_{Pd}$ le nombre d'atomes de palladium par particule de palladium déterminée par le modèle de Van Hardeveld et Hartog, $V_t$ le volume total de la bille de support mm$^3$ et $V_c$ le volume de la croûte en mm$^3$, lequel procédé comprend les étapes suivantes:

- une étape a) de préparation dans un appareillage d'une suspension colloïdale d'oxyde de palladium ou d'hydroxyde de palladium en phase aqueuse par mélange d'une solution aqueuse 1 comprenant au moins un hydroxyde sélectionné dans le groupe constitué par les hydroxydes d'alcalins et les hydroxydes d'alcalino-terreux et d'une solution aqueuse 2 comprenant au moins un sel précurseur du palladium, la solution 2 puis la solution 1 étant versé dans l'appareillage ou les solutions 1 et 2 étant versées simultanément dans l'appareillage, la température de préparation étant comprise entre 5°C et 40°C, le pH de ladite suspension colloïdale étant compris entre 1,0 et 3,5, le temps de séjour de la suspension colloïdale dans l'appareillage étant compris entre 0 et 20 heures
- une étape b) de préparation d'un support imprégné par imprégnation de ladite suspension colloïdale sur un support de surface spécifique comprise entre 50 et 210 m$^2$/g, le volume de la suspension colloïdale étant compris entre 0,9 et 1,1 fois le volume poreux du support,
- une étape c) de préparation d'un précurseur de catalyseur par maturation entre 0,5 et 40 heures dudit support imprégné
- une étape d) de préparation d'un précurseur séché par séchage dudit précurseur de catalyseur obtenu à l'étape c), entre 70°C et 200°C, sous air de combustion d'un hydrocarbure ou sous air chauffé, lesdits airs comprenant entre 0 et 80 gramme d'eau par kilogramme d'air, un taux d'oxygène compris entre 5% et 25% volume et un taux de dioxyde de carbone compris entre 0% et 10% volume.
- une étape e) de préparation d'un catalyseur par calcination, sous air de combustion d'un hydrocarbure, du précurseur séché obtenu à l'étape d), la température de calcination étant comprise entre 300°C et 500°C, ledit air de combustion d'un hydrocarbure comprenant entre 40 et 80 gramme d'eau par kilogramme d'air de combustion, un taux d'oxygène compris entre 5% et 15% volume et un taux de dioxyde de carbone compris entre 4% et 10% volume
- une étape f) de réduction du catalyseur obtenu à l'étape e), cette réduction étant réalisée en présence d'un gaz réducteur à une température comprise entre 80°C et 180°C.

2. Procédé de préparation selon la revendication 1 dans lequel dans l'étape a), le sel du précurseur du palladium est sélectionné dans le groupe constitué par le chlorure de palladium, le nitrate de palladium et le sulfate de palladium.

3. Procédé selon l'une des revendications 1 ou 2 dans lequel ledit support poreux est de l'alumine.

4. Procédé selon l'une quelconque des revendications 1 à 3 dans lequel ledit métal alcalin est le sodium.

5. Procédé selon l'une des revendications 1 à 4 dans lequel la surface spécifique dudit support poreux est comprise entre 100 et 160 m$^2$/g dans lequel la teneur en palladium dans le catalyseur est comprise entre 0,1 et 0,8 % poids, dans lequel au moins 80 % poids de palladium est réparti dans une croûte à la périphérie du support dont l'épaisseur est comprise entre 20 et 110 μm, dans lequel la dispersion métallique D est comprise entre 35% et 60% dans lequel la densité de particules de palladium dans la croûte est comprise entre 1600 et 3950 particules de palladium par μm².

**Patentansprüche**

1. Verfahren zur Herstellung eines Katalysators, umfassend Palladium, mindestens ein Metall, ausgewählt aus der Gruppe bestehend aus Alkali- und Erdalkalimetallen, einen porösen Träger in der Form von Kügelchen, umfassend mindestens ein hitzebeständiges Oxid, ausgewählt aus der Gruppe bestehend aus Siliciumdioxid, Aluminiumoxid und Siliciumdioxid-Aluminiumoxid, wobei die spezifische Oberfläche des porösen Trägers zwischen 50 und 210 m²/g beträgt, wobei der Gehalt an Palladium im Katalysator zwischen 0,05 und 2 Gew.-% beträgt, wobei mindestens 80 Gew.-% Palladium in einer Kruste an der Peripherie des Trägers verteilt sind, wobei die Dicke der Kruste zwischen 20 und 200 μm beträgt, wobei die Metalldispersion D, ausgedrückt in % Palladiumatome an der Oberfläche, bezogen auf die Gesamtheit der Atome, die in der Probe des Katalysators vorliegen, zwischen 25 % und 70 % beträgt, wobei die Metalldispersion durch Chemisorption von Kohlenmonoxid CO gemessen wird, wobei die Dichte der Palladiumpartikel in der Kruste zwischen 1500 und 4100 Palladiumpartikel pro μm² beträgt, wobei die Summe der Gehalte an Alkali- und/oder Erdalkalimetallen im Katalysator zwischen 0,05 und 5 Gew.-% beträgt, und wobei das Alkali- und/oder Erdalkalimetall auf homogene Weise quer durch den Träger mit einem Koeffizienten R zwischen 0,8 und 1,2 verteilt ist, wobei der Koeffizient R durch die folgende Formel definiert ist:

$$R = \int_{-r}^{r} C(x)x^2 dx / \frac{r^2}{3} \int_{-r}^{r} c(x) dx$$

wobei das Verteilungsprofil c(x) für x $\in$ [-r;+r] durch eine Castaing-Mikrosonde erhalten wird, c die lokale Konzentration des Alkali- und/oder Erdalkalielements ist, r der Radius des Kügelchens ist, und x die Position des Analysepunkts entlang des Korndurchmessers im Verhältnis zum Zentrum dieses Korns ist, wobei die Dichte der Partikel durch die folgende Formel definiert ist:

$$De = \frac{(\%Pd).N_a}{S_{BET}.M_{Pd}.n_{Pd}.10^{14}} \frac{V_t}{V_c}$$

avec

wobei % Pd der Massengehalt an Pd ist (Gramm Pd für 100 Gramm Katalysator),
$N_a$ die Avogadro-Zahl ist, $S_{BET}$ die spezifische Oberfläche des Trägers ist (in m²/g),
$M_{Pd}$ die Molmasse von Palladium ist, $n_{Pd}$ die Anzahl von Palladiumatomen pro Palladiumpartikel ist, bestimmt durch das Van Hardeveld- und Harlog-Modell, $V_t$ das Gesamtvolumen des Kügelchens des Trägers in mm³ ist, und $V_c$ das Volumen der Kruste in mm³ ist, wobei das Verfahren die folgenden Schritte umfasst:

- einen Schritt a) des Herstellens, in einer Vorrichtung, einer kolloidalen Suspension von Palladiumoxid oder Palladiumhydroxid in wässriger Phase durch Mischen einer wässrigen Lösung 1, umfassend mindestens ein Hydroxid, ausgewählt aus der Gruppe bestehend aus Alkalihydroxiden und Erdalkalihydroxiden, und einer wässrigen Lösung 2, umfassend mindestens ein Vorläufersalz von Palladium, wobei die Lösung 2, dann die Lösung 1 in die Vorrichtung gegossen wird, oder die Lösungen 1 und 2 gleichzeitig in die Vorrichtung gegossen werden, wobei die Herstellungstemperatur zwischen 5°C und 40°C liegt, wobei der pH der kolloidalen Suspension zwischen 1,0 und 3,5 liegt, wobei die Verweilzeit der kolloidalen Suspension in der Vorrichtung zwischen 0 und 20 Stunden liegt,
- einen Schritt b) des Herstellens eines Trägers, der durch Imprägnieren der kolloidalen Suspension auf einem Träger mit einer spezifischen Oberfläche zwischen 50 und 210 m²/g imprägniert wird, wobei das Volumen der kolloidalen Suspension zwischen dem 0,9- und 1,1-fachen des porösen Volumens des Trägers liegt,
- einen Schritt c) des Herstellens eines Katalysatorvorläufers durch Reifen des imprägnierten Trägers zwischen 0,5 und 40 Stunden,
- einen Schritt d) des Herstellens eines getrockneten Vorläufers durch Trocken des Katalysatorvorläufers, der in Schritt c) erhalten wird, zwischen 70°C und 200°C, unter der Verbrennungsluft eines Kohlenwasserstoffs oder unter erhitzter Luft, wobei die Luft zwischen 0 und 80 Gramm Wasser pro Kilogramm Luft umfasst, bei einem Sauerstoffgehalt zwischen 5 Vol.-% und 25 Vol.-% und einem Kohlendioxidgehalt zwischen 0 Vol.-% und 10 Vol.-%,
- einen Schritt e) des Herstellens eines Katalysators durch Calcinierung, unter der Verbrennungsluft eines Kohlenwasserstoffs, des getrockneten Vorläufers, der in Schritt d) erhalten wird, wobei die Temperatur der Calcinierung zwischen 300°C und 500°C liegt, wobei die Verbrennungsluft eines Kohlenwasserstoffs zwischen 40 und 80 Gramm Wasser pro Kilogramm Verbrennungsluft umfasst, bei einem Sauerstoffgehalt zwischen 5 Vol.-% und 15 Vol.-% und einem Kohlendioxidgehalt zwischen 4 Vol.-% und 10 Vol.-%,
- einen Schritt f) der Reduktion des Katalysators, der in Schritt e) erhalten wird, wobei diese Reduktion in Anwesenheit eines Reduktionsgases bei einer Temperatur zwischen 80°C und 180°C durchgeführt wird.

2. Herstellungsverfahren nach Anspruch 1, wobei in Schritt a) das Salz des Vorläufers von Palladium ausgewählt wird aus der Gruppe bestehend aus Palladiumchlorid, Palladiumnitrat und Palladiumsulfat.

3. Verfahren nach einem der Ansprüche 1 oder 2, wobei der poröse Träger Aluminiumoxid ist.

4. Verfahren nach einem der Ansprüche 1 bis 3, wobei das Alkalimetall Natrium ist.

5. Verfahren nach einem der Ansprüche 1 bis 4, wobei die spezifische Oberfläche des porösen Trägers zwischen 100 und 160 m$^2$/g liegt, wobei der Gehalt an Palladium im Katalysator zwischen 0,1 und 0,8 Gew.-% liegt, wobei mindestens 80 Gew.-% Palladium in einer Kruste an der Peripherie des Trägers verteilt sind, deren Dicke zwischen 20 und 110 $\mu$m beträgt, wobei die Metalldispersion D zwischen 35 % und 60 % beträgt, wobei die Dichte der Palladiumpartikel in der Kruste zwischen 1600 und 3950 Palladiumpartikel pro $\mu$m$^2$ beträgt.

## Claims

1. A process for preparing a catalyst comprising palladium, at least one metal selected from the group constituted by alkalis and alkaline-earths, and a porous support in the form of beads comprising at least one refractory oxide selected from the group constituted by silica, alumina and silica-alumina, in which the specific surface area of the porous support is in the range 50 to 210 m$^2$/g, the palladium content in the catalyst is in the range 0.05% to 2% by weight, at least 80% by weight of the palladium is distributed in a crust at the periphery of the support, the thickness of said crust being in the range 20 to 200 $\mu$m, the metallic dispersion D expressed as the % of surface Pd atoms with respect to the total number of Pd atoms present in the catalyst sample is in the range 25% to 70%; said metallic dispersion being carried out by chemisorption of carbon monoxide CO, the density of the palladium particles in the crust is in the range 1500 to 4100 particles of palladium per $\mu$m$^2$, the sum of the quantities of alkali and/or alkaline-earth metals in the catalyst is in the range 0.05% to 5% by weight and said alkali and/or alkaline-earth metal is distributed homogeneously across the support, with a coefficient R in the range 0.8 to 1.2, said coefficient R being defined by the following formula :

$$R = \int_{-r}^{r} c(x)x^2 dx \bigg/ \frac{r^2}{3} \int_{-r}^{r} c(x) dx$$

with the distribution profile c(x) for $x \in$ [- $r$,+$r$] obtained by Castaing microprobe, where c is the local concentration of the element, r is the radius of the bead or extrudate and x is the position of the analysis point along the diameter of the grain with respect to the centre of that grain, the particle density is obtained using the following formula:

$$De = \frac{(\%Pd).N_a}{S_{BET}.M_{Pd}.n_{Pd}.10^{14}} \frac{V_t}{V_c}$$

where % Pd : quantity of Pd by weight (grams of Pd per 100 grams of catalyst);
N$_a$: Avogadro's number;

$S_{BET}$: specific surface area of support (in $m^2/g$);

$M_{Pd}$: molar mass of palladium;

$n_{Pd}$: number of palladium atoms per palladium particle determined using the Van Hardeveld and Hartog model;

$V_t$: total volume of support bead in $mm^3$;

and $V_c$: volume of crust in $mm^3$;

said process comprising the following steps:

• a step a) for preparing, in an apparatus, a colloidal suspension of palladium oxide or palladium hydroxide in an aqueous phase by mixing an aqueous solution 1 comprising at least one hydroxide selected from the group constituted by alkali hydroxides and alkaline-earth hydroxides and an aqueous solution 2 comprising at least one precursor salt of palladium, the solution 2 then the solution 1 being poured into the apparatus or solutions 1 and 2 being poured simultaneously into the apparatus, the preparation temperature being in the range 5°C to 40°C, the pH of said colloidal suspension being in the range 1.0 to 3.5, the residence time for the colloidal suspension in the apparatus being in the range 0 to 20 hours;

• a step b) for preparing an impregnated support by impregnating said colloidal suspension onto a support with a specific surface area in the range 50 to 210 $m^2/g$, the volume of the colloidal suspension being in the range 0.9 to 1.1 times the pore volume of the support;

• a step c) for preparing a catalyst precursor by maturing said impregnated support for between 0.5 and 40 hours;

• a step d) for preparing a dry precursor by drying said catalyst precursor obtained in step c) between 70°C and 200°C in air from combustion of a hydrocarbon or in heated air, said air comprising 0 to 80 grams of water per kilogram of air, a quantity of oxygen in the range 5% to 25% by volume and a quantity of carbon dioxide in the range 0 to 10% by volume;

• a step e) for preparing a catalyst by calcining, in air from combustion of a hydrocarbon, of the dry precursor obtained in step d), the calcining temperature being in the range 300°C to 500°C, said hydrocarbon combustion air comprising in the range 40 to 80 grams of water per kg of combustion air, a quantity of oxygen in the range 5% to 15% by volume and a quantity of carbon dioxide in the range 4% to 10% by volume;

• a step f) for reducing the catalyst obtained in step e), said reduction being carried out in the presence of a reducing gas at a temperature in the range 80°C to 180°C.

2. A preparation process according to claim 1, in which in step a), the palladium precursor salt is selected from the group constituted by palladium chloride, palladium nitrate and palladium sulphate.

3. A preparation process according to claim 1 or 2, in which said porous support is alumina.

4. A catalyst according to one of claims 1 to 3, in which said alkali metal is sodium.

5. A catalyst according to one of claims 1 to 4, in which the specific surface area of said porous support is in the range 100 to 160 $m^2/g$ in which the quantity of palladium in the catalyst is in the range 0.1% to 0.8% by weight, in which at least 80% by weight of the palladium is distributed in a crust at the periphery of the support with a thickness in the range 20 to 110 $\mu m$, in which the metallic dispersion D is in the range 35% to 60%, and in which the palladium particle density in the crust is in the range 1600 to 3950 particles of palladium per $\mu m^2$.

EP 2 214 818 B1

Figure 1

e = 69 µm

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5929261 A
- US 4484015 A
- EP 0884102 A

**Littérature non-brevet citée dans la description**

- Analyse physico-chimique des catalyseurs industriels. 2001
- **R. VAN HARDEVELD ; F. HARTOG.** *Surf. Sci.,* 1969, vol. 15, 189